# EUROPEAN PATENT SPECIFICATION

(11) **EP 4 272 942 B1**
(45) Date of publication and mention of the grant of the patent: **11.03.2026**
(21) Application number: 21914525.7
(22) Date of filing: 29.12.2021
(51) Int. Cl.: B29D 30/24, B29D 30/26, B29D 30/32

(54) **METHOD AND DEVICE FOR ADJUSTING SPECIFICATIONS OF BUILDING DRUM**
EINSTELLEN DER SPEZIFIKATION EINER REIFENAUFBAUTROMMEL
RÉGLAGE DES SPÉCIFICATIONS D'UN TAMBOUR DE FABRICATION DE PNEUS

(30) Priority: 31.12.2020 CN 202011638995
(43) Date of publication of application: 08.11.2023
(73) Proprietor: Mesnac Co., Ltd., Qingdao, Shandong 266112 (CN); Qingdao Mesnac Machinery & Electric Engineering Co., Ltd., Jiaozhou Qingdao, Shandong 266300 (CN)
(72) Inventor: SUN, Xiaosong, Qingdao, Shandong 266042 (CN); SONG, Jianling, Qingdao, Shandong 266042 (CN); YU, Yihang, Qingdao, Shandong 266042 (CN)
(74) Representative: Winter, Brandl - Partnerschaft mbB
(86) International application number: PCT/CN2021/142575
(87) International publication number: WO 2022/143793

(56) References cited:
- CN-A- 107 584 786
- CN-A- 107 584 786
- CN-A- 108 527 904
- CN-A- 108 556 388
- CN-A- 108 556 388
- CN-U- 214 395 530
- US-A- 3 654 026
- US-A- 5 273 612
- US-A- 6 058 999

## Description

### Technical Field

The present invention relates to the technical field of tire processing technical, and in particular to a building drum specification adjustment method and a device.

### Background

At present, a building drum for tire forming is divided into a capsule drum and a mechanical drum. The main difference between the two drums is different in a turn-up mode. The capsule drum is inflated with a turn-up capsule and is turned up by a turn-up rod. In terms of the tire forming efficiency, the mechanical drum is much higher than the capsule drum, so the mechanical drum on the semi-steel forming machine has a great market share. However, the structure of a mechanical building drum is complex, and a side drum must be replaced for replacement, which is produced on the order of most tire factories of a general scale. Thus, the number of times of replacing the side drum is relatively large, and the replacing time of the side drum once is generally about 20-30 minutes, this time to replace the side drum represents a large loss to the tire factory.

Document CN 108 556 388 A relates to a building drum for a tire building machine, in particular to a stepless expansion and contraction driving device for the tire building drum. Document CN 107 584 786 A relates to a building drum. The building drum comprises a drum shaft, two side drums symmetrically arranged on the drum shaft, and a middle drum located between the two side drums, wherein the middle drum comprises two half drums which can be axially embedded into each other, each half drum has a diameter which can be radially changed, and the side drums and the half drums are connected and can be relatively moved. Document US 5 273 612 A relates to bead holding segments which are disposed along outer circumferences of a pair of drums. The bead holding segments can approach to and separate from each other in such manner that they can be expanded and contracted in the radial directions by means of an expanding/contracting mechanism. Document CN 108 527 904 A relates to a locking device for tire processing, a forming drum and a secondary expansion method.

### Summary

Some embodiments of the present invention provides a building drum specification adjustment method and a device, so as to solve the problem in the prior art that the replacement of a mechanical building drum requires time and effort.

In order to achieve the described object, according to an optional embodiment of the present invention, a building drum specification adjustment method is provided, the building drum specification adjustment device includes a driving assembly, a transmission assembly and a diameter-variable member which are sequentially connected; the driving assembly includes a driving member and an output member; and the building drum specification adjustment method includes: driving the output member axially moving by the driving member according to the size of the tire to be processed to a retracted position or an intermediate position, and enabling the diameter-variable member to be located at the minimum diameter or the intermediate diameter; after a material is pasted or a steel ring is installed, the output member is driven to move to an expansion position by the driving member, and the diameter-variable member is changed to the maximum diameter; after the processing is completed, the output member is driven by the driving member to move towards the retracted position, the diameter of the diameter-variable member is reduced, and the processed tire is taken down.

In an optional embodiment, the driving member is a cylinder, the output member is a piston, when the piston moves to an end of the cylinder, the piston is located at the retracted position or the expansion position, when the piston is located between two ends of the cylinder, the piston is located in the intermediate position, and the intermediate position is at least one, controlling a position of the piston by controlling a stroke distance of the piston in the cylinder.

In an optional embodiment, the cylinder is formed a plurality of air chambers with different sizes, and the piston is driven to move by different distances by adding pressures into the air chambers with different sizes, so that the piston moves in the retracted position, the intermediate position and the expansion position.

In an optional embodiment, the driving assembly further includes an elastic member, when the elastic member is in a natural state, the piston is located in the intermediate position, and by adding pressures into the cylinder, so as to the piston moves to the retracted position or the expansion position, by not adding pressures into the cylinder, so as to the piston is located at the intermediate position.

In an optional embodiment, the driving member is a motor, the output member is a lead screw and a nut, the lead screw is driven to rotate by the motor, and the lead screw drives the nut to move in the retracted position, at least one of the intermediate positions and the expansion position.

In an optional embodiment, when adjusting the diameter of the diameter-variable member, the diameter-variable member is adjusted in a step-by-step manner or a stepless manner.

According to an optional implementation of the present invention, provided is a building drum specification adjustment device, including: a driving assembly, the driving assembly including a driving member and an output member which are in a driving connection, wherein a driving distance of the output member along the axial direction of the driving member is able to be adjusted, and the output member has a retracted position and an expansion position, and at least one intermediate position located between the retracted position and the expansion position; a transmission assembly in drive connection with the output member; a diameter-variable member, the diameter-variable member being connected to the transmission assembly, the output member driving the movement of the transmission assembly to change the diameter size of the diameter-variable member, and when the output member is located at the retracted position, the intermediate position and the expansion position, the diameter-variable member respectively forming a minimum diameter, an intermediate diameter and a maximum diameter with successively increasing.

In an optional embodiment, the driving member is a cylinder, the output member is a piston, the piston is located in the retracted position or the expansion position when moving to an end of the cylinder, and the piston is located in the intermediate position when located between the two ends of the cylinder.

In an optional embodiment, the cylinder is formed a plurality of air chambers with different sizes, and the piston is driven to move by different distances by adding pressures into the air chambers with different sizes, so that the piston moves in the retracted position, the intermediate position and the expansion position.

In an optional embodiment, the driving assembly further includes an elastic member abutting against the output member, when the elastic member is in a natural state, the piston is located in the intermediate position, and by adding pressures into the cylinder, so as to the piston moves to the retracted position or the expansion position, by not adding pressures into the cylinder, so as to the piston is located at the intermediate position under the action of the elastic member.

In an optional embodiment, the driving member is a motor, the output member is a lead screw and a nut, the nut is connected to the transmission assembly, and when the motor drives the lead screw to rotate, the lead screw drives the nut to move in the retracted position, the intermediate position and the expansion position.

In an optional embodiment, the building drum specification adjustment device is a panel assembly, a locking block assembly or a middle drum assembly.

By applying the technical solution of the present invention, radial expansion and contraction of a building drum specification adjustment device are realized by arranging a driving assembly, a transmission assembly and a diameter-variable member to cooperate, so that a cylindrical outer surface is able to be formed at a radial position of the building drum specification adjustment device according to requirements, wherein the material is used to adhere to each half piece of material constituting the tire, and when in use, the output member is driven to move axially by the driving member, so that the output member is located in a retracted position or an intermediate position, and the output member can drive the diameter-variable member to move via the transmission assembly, so that the diameter of the diameter-variable member is able to be adjusted to a minimum diameter or intermediate diameter, and operations such as tire pasting material is able to be performed, After completion, the output member is driven to move to the expansion position again, so as to enlarge the diameter of the diameter-variable member, In this way, subsequent operations such as fixing a steel ring and inflating the tire are performed, and after the processing is completed, the tire is able to be removed by reducing the diameter of the diameter-variable member. By the described arrangement method, when manufacturing a tire, the building drum specification adjustment device can process a plurality of inscribable tire grades, and the side drum does not need to be replaced, and only the diameter size needs to be adjusted, thereby simply and quickly implementing the processing of a plurality of inscribable tire grades, which not only saves time and labour, but also improves the processing efficiency, and avoids various losses caused by the replacement of the side drum.

### Brief Description of the Drawings

The accompanying drawings, which form a part of the present invention, are used for providing a further understanding of the present invention. The schematic embodiments and illustrations of the present invention are used for explaining the present invention, and do not form improper limits to the present invention. In the drawings:
Fig. 1 shows a flowchart of a building drum specification adjustment method of the present invention;
Fig. 2 shows a schematic view of the structure of the building drum specification adjustment device of the present invention applied to a tire building device;
Fig. 3 shows an enlarged view of P in Fig. 2.

The Figs. include the following reference signs:
10: main shaft; 20: turn-up rod assembly; 21: rolling; 30: panel assembly; 31: expansion driving member; 32: subplate block; 33: backward and forward driving member; 40: locking block assembly; 41: driving assembly; 411: driving member; 412: output member; 413: elastic member; 42: transmission assembly; 43: diameter-variable member; 50: middle drum assembly.

### Detailed Description of the Embodiments

It is important to note that the embodiments of the present disclosure and the characteristics in the embodiments is able to be combined under the condition of no conflicts. The present disclosure will be described below with reference to the drawings and embodiments in detail.

In order to solve the problem in the prior art that the replacement of a mechanical building drum requires time and effort, the present invention provides a building drum specification adjustment method and a device.

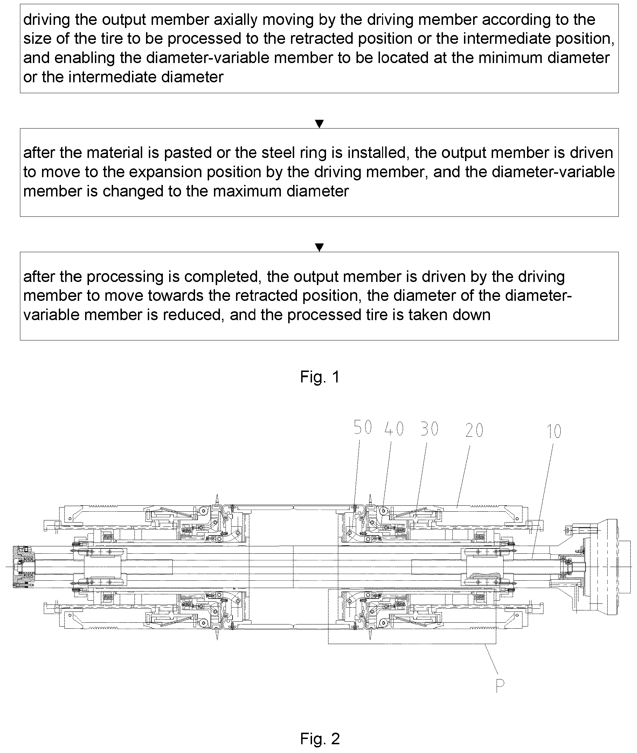

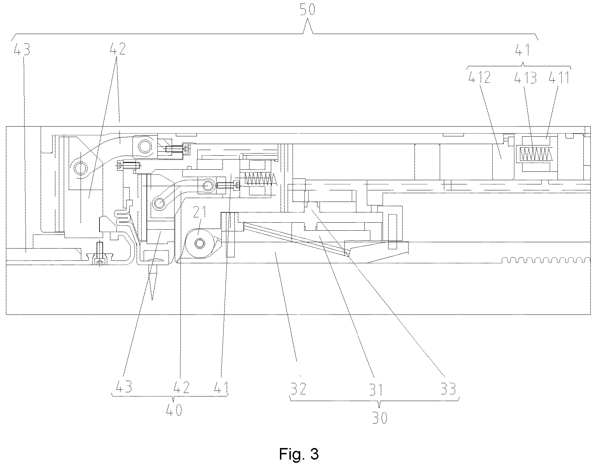

As shown in Fig. 1, the building drum specification adjustment method, as shown in Figs. 2 and 3, the building drum specification adjustment device includes a driving assembly 41, a transmission assembly 42 and a diameter-variable member 43 which are connected in sequence. The driving assembly 41 includes a driving member 411 and an output member 412. The building drum specification adjustment method includes: driving, by the driving member 411, the output member 412 to move axially to a retracted position or an intermediate position according to the size of a tire to be processed, and locating the diameter-variable member 43 at the minimum or intermediate diameter; after the material is pasted or the steel ring is installed, the output member 412 is driven to move towards the expansion position by the driving member 411, and the diameter-variable member 43 is changed towards the maximum diameter; after the processing is completed, the output member 412 is driven by the driving member 411 to move toward the retracted position, the diameter of the diameter-variable member 43 is reduced, and the processed tire is taken out.

In this embodiment, the driving assembly 41, the transmission assembly 42, and the diameter-variable member 43 cooperate with each other to realize the radial expansion and contraction of the building drum specification adjustment device, so that a cylindrical outer surface is able to be formed at a radial position of the building drum specification adjustment device according to requirements, when used, the output member 412 is driven to move axially by the driving member 411, so that the output member 412 is in a retracted position or an intermediate position, and the output member 412 can drive the diameter-variable member 43 to move via the transmission assembly 42. By adjusting the diameter of the diameter-variable member 43 to a minimum diameter or intermediate diameter, after completion, the output member 412 is driven to move to the expansion position again, so that the diameter of the diameter-variable member 43 is enlarged, In this way, subsequent operations such as fixing a steel ring and inflating the tire are carried out, and after the processing is completed, the tire is able to be removed by reducing the diameter of the diameter-variable member 43. By the described arrangement method, when manufacturing a tire, the building drum specification adjustment device can process a plurality of inscribable tire grades, and the side drum does not need to be replaced, and only the diameter size needs to be adjusted, thereby simply and quickly implementing the processing of a plurality of inscribable tire grades, which not only saves time and labour, but also improves the processing efficiency, and avoids various losses caused by the replacement of the side drum.

In the present embodiment, description will be given with an example in which the building drum specification adjustment method and device are applied to the tire processing method and device, respectively. Accordingly, the building drum specification adjustment device is the locking block assembly 40 and the middle drum assembly 50 of the tire building device. Of course, the building drum specification adjustment method and device can also be applied to other occasions according to needs, and the panel assembly 30 of the tire building device can also use the molding drum description adjustment device of the present embodiment.

As shown in Figs. 2 and 3, a tire building device using the described building drum specification adjustment device includes a main shaft 10, a turn-up rod assembly 20, a panel assembly 30, a locking block assembly 40 and a middle drum assembly 50, the turn-up rod assembly 20, the panel assembly 30, the locking block assembly 40 and the middle drum assembly 50 are sleeved outside the main shaft 10, the tire building method to which the described building drum specification adjustment method is applied specifically includes: adjusting the initial diameter sizes of the panel assembly 30, the locking block assembly 40 and the middle drum assembly 50, performing pasting material; installing the tire steel ring outside the locking block assembly 40, adjusting the diameter of the locking block assembly 40 to increase, and making the locking block assembly 40 abut against the locking tire steel ring; adjusting the diameters of the panel assembly 30 and the middle drum assembly 50, so that the outer surfaces of the panel assembly 30, the locking block assembly 40 and the middle drum assembly 50 are flush and form a flat and uniform surface; the turn-over action of the turn-up rod assembly 20 applies the rubber material to the side face of the tire, and after the attachment is completed, the turn-up rod assembly 20 moves reversely and is reset; the diameters of the panel assembly 30, the locking block assembly 40 and the middle drum assembly 50 are reduced , and then the tire is removed from the main shaft 10.

In this embodiment, the panel assembly 30, the locking block assembly 40 and the middle drum assembly 50 can expand and contract in the radial direction, so that three can form a cylindrical outer surface at each radial position for fitting each half piece of material constituting the tire. In use, the initial diameter sizes of the panel assembly 30, the locking block assembly 40, and the middle drum assembly 50 are adjusted according to the size of the tire to be processed, so that the cylindrical outer surface formed by the three together can meet the processing requirements such as pasting material, and then operations such as installing a steel ring and pasting material is able to be performed, By adjusting the diameter formed by expanding three, the steel ring is able to be fixed and form a flat cambered surface, then the tire is able to be formed by the turn-up rod assembly 20 cooperating with inflation, etc., the tire is able to be removed by reducing the diameters of the panel assembly 30, locking block assembly 40, and middle drum assembly 50. Since the diameter of each of the panel assembly 30, the locking block assembly 40 and the middle drum assembly 50 is able to be adjusted, it is only necessary to correspondingly adjust the diameters of the three when processing tires of different orders. By the described arrangement method, a tire building device can process a plurality of inscribable tires, and only the diameter size needs to be adjusted without replacing the side drum, thereby simply and quickly implementing the processing of a plurality of inscribable tires, which not only saves time and effort, but also improves the processing efficiency, thereby avoiding various losses caused by the replacement of the side drum. In addition, two inch stages tires is able to be manufactured with one device, thereby reducing manufacturing costs.

This embodiment is described by taking a tire processed in two inch stages as an example. The two inch stages are divided into a first preset size and a second preset size which are relatively small. When the initial diameter is adjusted, if the size of the tire to be processed is the first preset size, the panel assembly 30 is contracted, the locking block assembly 40 and the middle drum assembly 50 are adjusted to the minimum diameter, and the subsequent diameter expansion is able to be naturally limited by a steel ring or the like; if the size of the tire to be processed is a second preset size which is greater than the first preset size, the panel assembly 30 is expanded during adjustment, the locking block assembly 40 and the middle drum assembly 50 are adjusted to the intermediate diameter, and the maximum diameter is adjusted during subsequent re-expansion. Of course, in addition to processing two inch stages tires, more adjustable diameters may be added to process more inch stages tires.

In the present embodiment, before the turn-up operation of the turn-up rod assembly 20, the backward and forward driving member 33 of the panel assembly 30 drives the subplate blocks 32 of the panel assembly 30 to move axially, and enables the subplate blocks 32 to avoid the rollers 21 of the turn-up rod assembly 20, and then the turn-up operation of the turn-up rod assembly 20 causes the rollers 21 of the turn-up rod assembly 20 to press the rubber material to adhere the rubber material to the side surface of the tire. The subplate block 32 has a radial movement and an axial movement, in which the radial movement is for adjusting the diameter in order to match with different tire sizes, the axial movement is to block or avoid the rollers 21 of the turn-up rod assembly 20. Specifically, the panel assembly 30 shields the rollers 21 of the turn-up rod assembly 20 when the turn-up rod assembly 20 is not moved, so that the outer surface of the device forms a flat cambered surface, thereby avoiding the situation where the unevenness affects the operations such as pasting material, when the turn-up rod assembly 20 is required to move, the subplate block 32 is able to avoid the rollers 21 under the drive of the backward and forward driving member 33, this enables the turn-up rod assembly 20 to process the tire normally.

In this embodiment, when the diameter of the panel assembly 30 is adjusted, the first inclined surface of the expansion driving member 31 of the panel assembly 30 abuts against and is pressed against the second inclined surface of the subplate block 32 of the panel assembly 30, so that the diameter of the subplate block 32 is able to be shrunk or expanded to a required size by the interaction between the first inclined surface and the second inclined surface.

In the present embodiment, the structure of the locking block assembly 40 and the structure of the middle drum assembly 50 are substantially the same, and the adjustment manners of the diameters of the two are also the same. According to the differences in the structure adopted by the locking block assembly 40 and the structure adopted by the middle drum assembly 50, the specific adjustment manners may be the following manners, specifically:

### Manner 1

The locking block assembly 40 and the middle drum assembly 50 include a driving assembly 41, a transmission assembly 42 and a diameter-variable member 43, wherein the driving assembly 41 includes a cylinder and a piston, the cylinder has a plurality of air chambers, and the piston and the air chambers are matched, pressure is applied to different air chambers of the cylinder of the driving assembly 41 of the locking block assembly 40 or the middle drum assembly 50, because the size of the air chamber is different, the distances by which the piston of the air chamber driving the driving assembly 41 moves are also different. Thus, the piston moves in the retracted position, the intermediate position and the expansion position, and the movement distance of the piston directly influences the diameter of the diameter-variable member 43. Thus, the transmission assembly 42 of the locking block assembly 40 or the middle drum assembly 50 drives the diameter-variable member 43 of the locking block assembly 40 or the middle drum assembly 50 to change to the minimum diameter, the intermediate diameter, or the maximum diameter.

### Manner 2

The locking block assembly 40 and the middle drum assembly 50 still include the described components, and the difference lies in that the cylinder is not provided with the air chambers of different sizes, but is also provided with an elastic member 413, the elastic member 413 abuts against the piston, and when the elastic member 413 is in a natural state, the piston is in an intermediate position under the action of the elastic member 413. By adding the pressure to the cylinder of the driving assembly 41, the piston is driven to compress or stretch the elastic member 413 so as to move to a retracted position or an expansion position. When the piston needs to be in an intermediate position, the piston is able to move to the intermediate position under the action of the elastic member 413 of the driving assembly 41 without providing pressure to the cylinder. In this way, the transmission assembly 42 is able to drive the diameter-variable member 43 to change to the minimum diameter, the maximum diameter or the intermediate diameter.

### Manner 3

The driving assembly 41 of the locking block assembly 40 and the middle drum assembly 50 include a drive-connected motor and a lead screw, and a nut. The lead screw of the driving assembly 41 is driven to rotate by the motor of the driving assembly 41, the lead screw drives the nut of the driving assembly 41 to move axially, so that the nut moves in a retracted position, an intermediate position and an expansion position, and the nut is able to drive the diameter-variable member 43 to change to the minimum diameter, the intermediate diameter or the maximum diameter by the transmission assembly 42.

In the described three manners, the diameter of the diameter-variable member 43 is controlled by controlling the axial movement distance of the output end of the driving assembly 41. Definitely, in addition to the foregoing three manners, the diameter of the diameter-variable member 43 may also be adjusted in other manners. Furthermore, when adjusting the diameter of the panel assembly 30, the locking block assembly 40 and the middle drum assembly 50, the adjustment is able to be carried out in a step-by-step manner, for example, setting an intermediate position, an intermediate diameter, etc. of a plurality of different steps; alternatively, the adjustment is able to be performed in a stepless adjustment manner, for example, any diameter between the maximum diameter and the minimum diameter is able to be used as an intermediate diameter, and the diameters of the panel assembly 30, the locking block assembly 40 and the middle drum assembly 50 are able to be adjusted to a required size by stepless adjustment, etc.

The present embodiment further provides a building drum specification adjustment device, which is applied to a tire building device. As shown in Figs. 2 and 3, the tire building device includes a main shaft 10, a turn-up rod assembly 20, a panel assembly 30, a locking block assembly 40 and a middle drum assembly 50, wherein the turn-up rod assembly 20 is used for processing a side edge of the tire; the panel assembly 30 is sleeved on the main shaft 10, and the panel assembly 30 is able to expand and contract along the radial direction of the main shaft 10; the locking block assembly 40 is sleeved on the main shaft 10, and is able to expand and contract along the radial direction of the main shaft 10; the middle drum assembly 50 is sleeved on the main shaft 10, the middle drum assembly 50 is able to expand and contract along the radial direction of the main shaft 10, there are multiple panel assemblies 30, multiple locking block assemblies 40 and multiple turn-up rod assemblies 20, and on both sides of the middle drum assembly 50, the locking block assemblies 40, the panel assemblies 30 and the turn-up rod assemblies 20 are arranged in sequence along the direction away from the middle drum assembly 50. As mentioned above, by the mutual cooperation between the described components and the adjustment between the formation of the components, so that the tire building device can process multiple inch stage tires, and there is no need to replace the side drum, It is only necessary to adjust the size of the diameter, so that a plurality of inch stages of tires is able to be easily and quickly processed, not only is time-saving and labour-saving, but also the machining efficiency is improved, and various losses caused by the replacement of the side drum are avoided.

As shown in Fig. 3, the panel assembly 30 includes an expansion driving member 31 and a subplate block 32, wherein the expansion driving member 31 is arranged along the axial direction of the main shaft 10; the subplate block 32 abuts against the output end of the expansion driving element 31, and the subplate block 32 is able to expand and contract in the radial direction of the main shaft 10 under the drive of the expansion driving element 31. Specifically, an output end of the expansion driving member 31 has a first inclined surface, an inner side of the subplate block 32 has a second inclined surface, and the first inclined surface and the second inclined surface abut against and are press-fitted. In this way, when the expansion driving member 31 moves, the first inclined surface is able to press the second inclined surface, so that an axial movement of the expansion driving member 31 is converted into a radial movement, thereby driving the subplate block 32 to expand and contract.

In the present embodiment, one end of the turn-up rod assembly 20 adjacent to the middle drum assembly 50 is provided with a roller 21, and the panel assembly 30 further includes a backward and forward driving member 33, the backward and forward driving members 33 are arranged in the radial direction of the main shaft 10 and are directly or indirectly in driving connection with the subplate blocks 32, The subplate block 32 not only has the function of changing the diameter, but also has the function of shielding the roller 21. Specifically, When the turn-up rod assembly 20 does not move, the subplate block 32 shields the rollers 21 under the action of the backward and forward driving member 33, so that the outer surface of the device forms a flat cambered surface, and when the turn-up rod assembly 20 needs to be moved, the backward and forward driving member 33 drives the subplate block 32 to avoid from the roller 21, this allows the turn-up rod assembly 20 to properly machine the sides of the tire.

In the present embodiment, the locking block assembly 40 and the middle drum assembly 50 are the building drum specification adjustment devices, and the structures of the two are substantially the same, each of them includes a driving assembly 41, a transmission assembly 42 and a diameter-variable member 43, wherein the transmission assembly 42 is in drive connection with the driving assembly 41, the driving assembly 41 is arranged along the axial direction of the main shaft 10, i.e. the axial direction of the driving assembly 41 is perpendicular to the expansion direction of the diameter-variable member 43, the diameter-variable member 43 is connected to the transmission assembly 42, and the diameter-variable member 43, as the outermost side of the device as a whole, forms a cambered surface. Thus, the diameter-variable member 43 is able to be driven by the transmission assembly 42 to expand and contract along the radial direction of the main shaft 10, to switch between a minimum diameter and a maximum diameter.

In general, the diameter-variable member 43 of the locking block assembly 40 is a locking block sliding block used for cooperating with a steel ring to lock the steel ring, while the diameter-variable member 43 of the middle drum assembly 50 is a middle drum plate located in the axial middle of the main shaft 10 and used for cooperating with a rubber material. Preferably, the diameter-variable member 43 of the middle drum assembly 50 and the subplate block 32 of the panel assembly 30 of the present embodiment are both of tooth block structure.

With regard to the locking block assembly 40 and the middle drum assembly 50, one difference therebetween lies in the specific structure of the transmission assembly 42, the transmission assembly 42 of the locking block assembly 40 is a bent connecting rod, and one end of the connecting rod is rotatably connected to the output end of the driving assembly 41, the other end is rotatably connected to the diameter-variable member 43, and by pushing the connecting rod by the driving assembly 41, the connecting rod rotates and drives the diameter-variable member 43 to move radially, thereby realizing the conversion of the movement direction; the transmission assembly 42 of the middle drum assembly 50 further includes a middle drum sliding block. One end of the connecting rod away from the driving assembly 41 is connected to the middle drum sliding block, and the middle drum sliding block is connected to the diameter-variable member 43, thereby driving the diameter-variable member 43 to move radially. Of course, in addition to the above manners, other components may also be added to the transmission assembly 42 as required. It should be noted that, although the structure of the transmission assembly 42 of the locking block assembly 40 is different from the structure of the transmission assembly 42 of the middle drum assembly 50, the transmission assemblies 42 of the locking block assembly 40 and the middle drum assembly 50 have the same function, and both function as transmission and diversion.

As stated above, in terms of structure, the driving assembly 41 includes a driving member 411 and an output member 412, the output member 412 moves along the axial direction of the driving member 411, so that the movement direction of the output member 412 is perpendicular to the expansion direction of the diameter-variable member 43. The specific structure has the following three structural forms:
Manner 1
   the driving member 411 is a cylinder, the output member 412 is a piston, and the piston is movably arranged in the cylinder and is connected to the transmission assembly 42. The air cylinder is able to form a plurality of air chambers with different sizes, and when pressure is conducted in the air chambers with different sizes, the piston moves in different distances, the piston is in a retracted position when moving to one end of the cylinder, is in an expansion position when moving to the other end, and is in an intermediate position when moving to the middle of two ends of the cylinder. In the above three positions, the diameter-variable members 43 respectively form a minimum diameter, a maximum diameter, and an intermediate diameter between the minimum diameter and the maximum diameter. In this way, the piston is able to be moved by different distances by pressuring into different air chambers, so that the diameter-variable member 43 has different diameters.
Manner 2
   the driving member 411 is a cylinder, the output member 412 is a piston, the driving assembly 41 further includes an elastic member 413, and the piston is movably arranged in the cylinder; This manner is different from the manner 1 in that no air chamber with different sizes is provided in this manner, and the movement of the piston is controlled by the elastic member 413. the elastic member 413 abuts against the piston and is connected to the transmission assembly 42, and the piston has a retracted position and an expansion position moving to the end of the cylinder, and an intermediate position between the retracted position and the expansion position, the piston being in the intermediate position when the elastic member 413 is in a natural condition. In this way, when the diameter-variable member 43 is required to be formed with the minimum diameter or the maximum diameter, the pressure is able to be added to both sides of the piston in the cylinder or the positive pressure and the negative pressure is able to be added to one side of the piston. When it is required that the diameter-variable member 43 has the intermediate diameter, the piston is able to move under the action of the elastic member 413 and be kept in the intermediate position without being pressurized into the cylinder. Namely, when the piston is located at the retracted position, the intermediate position and the expansion position, the diameter-variation member 43 respectively forms a minimum diameter, an intermediate diameter and a maximum diameter with diameters successively increasing. In this way, the diameter-variation member 43 is changed in diameter. The structure shown in the drawing of this embodiment adopts this manner. The elastic member 413 is an elastic member such as a spring.
Manner 3

The driving member 411 is a motor, and the output member 412 is a lead screw and a nut. In this manner, a motor drive manner is used, and because the motor drive may accurately control the stroke. Accordingly, the screw is directly drive-connected to the motor, and driven by the motor to rotate, and the nut is screw fitted with the lead screw, and is connected to the transmission assembly 42, such that when the diameter of the diameter-variable member 43 needs to be changed, the lead screw is driven to rotate by the motor. The lead screw drives the nut to axially move between a retracted position, an intermediate position and an expansion position, so that the diameter-variable member 43 is formed to have a minimum diameter, an intermediate diameter and a maximum diameter which gradually increase in diameter.

By the described method, it is able to be achieved that the driving assembly 41 drives the diameter-variable member 43 to move to a required position.

One or more intermediate positions and intermediate diameters is able to be provided according to needs, and the diameters of the panel assembly 30, the locking block assembly 40 and the middle drum assembly 50 are adjusted between the minimum diameter, the maximum diameter and each intermediate diameter by step-by-step adjustment or stepless adjustment.

It should be noted that, a plurality in the foregoing embodiment refers to at least two.

From the above description, it can be seen that the above embodiments of the present invention achieve the following technical effects:
1. the problem in the prior art that the replacement inch-grades of a mechanical building drum is time-consuming and laborious;
2. The tire building device can process a tire of multiple inch-grades, and can simply and quickly achieve the processing of a tire of multiple inch-grades without needing to replace a side drum;
3. time-saving and labour-saving, also improving the processing efficiency, and avoiding various losses caused by the replacement of the side drum;
4. A device can process inch stages tires, thereby reducing manufacturing costs.

## Claims

1. A building drum specification adjustment method, wherein a building drum specification adjustment device comprises a driving assembly (41), a transmission assembly (42) and a diameter-variable member (43) which are sequentially connected; the driving assembly (41) comprises a driving member (411) and an output member (412); and the building drum specification adjustment method comprises:
driving the output member (412) axially moving by the driving member (411) according to the size of the tire to be processed to a retracted position or an intermediate position, and enabling the diameter-variable member (43) to be located at the minimum diameter or the intermediate diameter;
after a material is pasted or a steel ring is installed, the output member (412) is driven to move to an expansion position by the driving member (411), and the diameter-variable member (43) is changed to the maximum diameter;
after the processing is completed, the output member (412) is driven by the driving member (411) to move towards the retracted position, the diameter of the diameter-variable member (43) is reduced, and the processed tire is taken down.

2. The building drum specification adjustment method according to claim 1, wherein the driving member (411) is a cylinder, the output member (412) is a piston, when the piston moves to an end of the cylinder, the piston is located at the retracted position or the expansion position, when the piston is located between two ends of the cylinder, the piston is located in the intermediate position, and the intermediate position is at least one, controlling a position of the piston by controlling a stroke distance of the piston in the cylinder.

3. The building drum specification adjustment method according to claim 2, wherein the cylinder is formed a plurality of gas chambers with different sizes, and the piston is driven to move by different distances by adding pressures into the gas chambers with different sizes, so that the piston moves in the retracted position, the intermediate position and the expansion position.

4. The building drum specification adjustment method according to claim 2, wherein the driving assembly (41) further comprises an elastic member (413), when the elastic member (413) is in a natural state, the piston is located in the intermediate position, and by adding pressures into the cylinder, so as to the piston moves to the retracted position or the expansion position, by not adding pressures into the cylinder, so as to the piston is located at the intermediate position.

5. The building drum specification adjustment method according to claim 1, wherein the driving member (411) is a motor, the output member (412) is a lead screw and a nut, the lead screw is driven to rotate by the motor, and the lead screw drives the nut to move in the retracted position, at least one of the intermediate positions and the expansion position.

6. The building drum specification adjustment method according to claim 1, wherein when adjusting the diameter of the diameter-variable member (43), the diameter-variable member (43) is adjusted in a step-by-step manner or a stepless manner.

7. A building drum specification adjustment device configured to perform the building drum specification adjustment method according to any one of claim 1 to 6, comprising:
a driving assembly (41), the driving assembly (41) comprising a driving member (411) and an output member (412) which are in a driving connection, wherein a driving distance of the output member (412) along the axial direction of the driving member (411) is able to be adjusted, and the output member (412) has a retracted position and an expansion position, and at least one intermediate position located between the retracted position and the expansion position;
a transmission assembly (42) in drive connection with the output member (412);
a diameter-variable member (43), the diameter-variable member (43) being connected to the transmission assembly (42), the output member (412) driving the movement of the transmission assembly (42) to change the diameter size of the diameter-variable member (43), and when the output member (412) is located at the retracted position, the intermediate position and the expansion position, the diameter-variable member (43) respectively forming a minimum diameter, an intermediate diameter and a maximum diameter with successively increasing diameters.

8. The building drum specification adjustment device according to claim 7, wherein the driving member (411) is a cylinder, the output member (412) is a piston, the piston is located in the retracted position or the expansion position when moving to an end of the cylinder, and the piston is located in the intermediate position when located between the two ends of the cylinder.

9. The building drum specification adjustment device according to claim 8, wherein the cylinder is formed a plurality of gas chambers with different sizes, and the piston is driven to move by different distances by adding pressures into the gas chambers with different sizes, so that the piston moves in the retracted position, the intermediate position and the expansion position.

10. The building drum specification adjustment device according to claim 8, wherein the driving assembly (41) further comprises an elastic member (413) abutting against the output member (412), when the elastic member (413) is in a natural state, the piston is located in the intermediate position, and by adding pressures into the cylinder, so as to the piston moves to the retracted position or the expansion position, by not adding pressures into the cylinder, so as to the piston is located at the intermediate position under the action of the elastic member (413).

11. The building drum specification adjustment device according to claim 7, wherein the driving member (411) is a motor, the output member (412) is a lead screw and a nut, the nut is connected to the transmission assembly (42), and when the motor drives the lead screw to rotate, the lead screw drives the nut to move in the retracted position, the intermediate position and the expansion position.

12. The building drum specification adjustment device according to claim 7, wherein the building drum specification adjustment device is a backing plate assembly (30), a locking block assembly (40) or a middle drum assembly (50).

## Patentansprüche

1. Verfahren zur Einstellung der Spezifikation einer Bautrommel, wobei eine Vorrichtung zum Einstellen der Spezifikation einer Bautrommel eine Antriebsbaugruppe (41), eine Getriebebaugruppe (42) und ein durchmesservariables Element (43) aufweist, die nacheinander miteinander verbunden sind; wobei die Antriebsbaugruppe (41) ein Antriebselement (411) und ein Abtriebselement (412) aufweist; und wobei das Verfahren zum Einstellen der Spezifikation einer Bautrommel umfasst:
Antreiben des Abtriebselements (412), das sich axial durch das Antriebselement (411) entsprechend der Größe des zu bearbeitenden Reifens in eine zurückgezogene Position oder eine Zwischenposition bewegt, und Ermöglichen, dass das durchmesservariable Element (43) am minimalen Durchmesser oder am mittleren Durchmesser positioniert wird;
wobei nach einem Aufkleben eines Materials oder einem Anbringen eines Stahlrings das Abtriebselement (412) durch das Antriebselement (411) angetrieben wird, um sich in eine Ausdehnungsposition zu bewegen, und das durchmesservariable Element (43) auf den maximalen Durchmesser geändert wird;
wobei nach einem Abschluss der Bearbeitung das Abtriebselement (412) durch das Antriebselement (411) angetrieben wird, um sich in Richtung der zurückgezogenen Position zu bewegen, der Durchmesser des durchmesservariablen Elements (43) verringert wird und der bearbeitete Reifen abgenommen wird.

2. Verfahren zur Einstellung der Spezifikation einer Bautrommel gemäß Anspruch 1, wobei das Antriebselement (411) ein Zylinder ist, das Abtriebselement (412) ein Kolben ist, sich der Kolben, wenn er sich zu einem Ende des Zylinders bewegt, in der zurückgezogenen Position oder der Ausdehnungsposition befindet, sich der Kolben, wenn er sich zwischen zwei Enden des Zylinders befindet, in der Zwischenposition befindet und die Zwischenposition mindestens eine ist, wobei eine Position des Kolbens durch ein Steuern einer Hubstrecke des Kolbens in dem Zylinder gesteuert wird.

3. Verfahren zur Einstellung der Spezifikation einer Bautrommel gemäß Anspruch 2, wobei der Zylinder eine Mehrzahl von Gasräumen mit unterschiedlichen Größen aufweist und der Kolben durch Beaufschlagen der Gasräume mit unterschiedlichen Größen mit Drücken dazu gebracht wird, sich um unterschiedliche Strecken zu bewegen, so dass sich der Kolben in die zurückgezogene Position, die Zwischenposition und die Ausdehnungsposition bewegt.

4. Verfahren zur Einstellung der Spezifikation einer Bautrommel gemäß Anspruch 2, wobei die Antriebsbaugruppe (41) ferner ein elastisches Element (413) aufweist, wobei sich der Kolben in der Zwischenposition befindet, wenn sich das elastische Element (413) in einem natürlichen Zustand befindet, und sich der Kolben durch Beaufschlagen des Zylinders mit Drücken in die zurückgezogene Position oder die Ausdehnungsposition bewegt, und sich der Kolben durch Nichtbeaufschlagen des Zylinders mit Drücken in der Zwischenposition befindet.

5. Verfahren zur Einstellung der Spezifikation einer Bautrommel gemäß Anspruch 1, wobei das Antriebselement (411) ein Motor ist, das Abtriebselement (412) eine Leitspindel und eine Mutter ist, die Leitspindel durch den Motor in Drehung versetzt wird und die Leitspindel die Mutter antreibt, um sich in die zurückgezogene Position, mindestens eine der Zwischenpositionen und die Ausdehnungsposition zu bewegen.

6. Verfahren zur Einstellung der Spezifikation einer Bautrommel gemäß Anspruch 1, wobei bei der Einstellung des Durchmessers des durchmesservariablen Elements (43) das durchmesservariable Element (43) schrittweise oder stufenlos eingestellt wird.

7. Vorrichtung zur Einstellung der Spezifikation einer Bautrommel, die so konfiguriert ist, dass sie das Verfahren zur Einstellung der Spezifikation einer Bautrommel gemäß einem der Ansprüche 1 bis 6 ausführt, mit:
einer Antriebsbaugruppe (41), wobei die Antriebsbaugruppe (41) ein Antriebselement (411) und ein Abtriebselement (412) aufweist, die in einer Antriebsverbindung stehen, wobei ein Antriebsabstand des Abtriebselements (412) entlang der axialen Richtung des Antriebselements (411) eingestellt werden kann, und das Abtriebselement (412) eine zurückgezogene Position und eine Ausdehnungsposition Position sowie mindestens eine Zwischenposition zwischen der zurückgezogenen Position und der Ausdehnungsposition Position aufweist;
einer Getriebebaugruppe (42), die mit dem Abtriebselement (412) in Antriebsverbindung steht;
einem durchmesservariablen Element (43), wobei das durchmesservariable Element (43) mit der Getriebebaugruppe (42) verbunden ist, wobei das Abtriebselement (412) die Bewegung der Getriebebaugruppe (42) antreibt, um die Durchmessergröße des durchmesservariablen Elements (43) zu ändern, und wobei das durchmesservariable Element (43), wenn sich das Abtriebselement (412) in der zurückgezogenen Position, der Zwischenposition und der Ausdehnungsposition befindet, jeweils einen Mindestdurchmesser, einen Zwischendurchmesser und einen Maximaldurchmesser mit sukzessive zunehmenden Durchmessern bildet.

8. Vorrichtung zur Einstellung der Spezifikation einer Bautrommel gemäß Anspruch 7, wobei das Antriebselement (411) ein Zylinder ist, das Abtriebselement (412) ein Kolben ist, sich der Kolben in der zurückgezogenen Position oder der Ausdehnungsposition befindet, wenn er sich zu einem Ende des Zylinders bewegt, und sich der Kolben in der Zwischenposition befindet, wenn er sich zwischen den beiden Enden des Zylinders befindet.

9. Vorrichtung zur Einstellung der Spezifikation einer Bautrommel gemäß Anspruch 8, wobei der Zylinder eine Mehrzahl von Gasräumen mit unterschiedlichen Größen aufweist und der Kolben durch Beaufschlagen der Gasräume mit unterschiedlichen Größen mit Drücken dazu angetrieben wird, sich um unterschiedliche Strecken zu bewegen, so dass sich der Kolben in die zurückgezogene Position, die Zwischenposition und die Ausdehnungsposition bewegt.

10. Vorrichtung zur Einstellung der Spezifikation einer Bautrommel gemäß Anspruch 8, wobei die Antriebsbaugruppe (41) ferner ein elastisches Element (413) aufweist, das an das Abtriebselement (412) angrenzt, wenn sich das elastische Element (413) in einem natürlichen Zustand befindet, sich der Kolben in der Zwischenposition befindet, und sich der Kolben durch Beaufschlagen des Zylinders mit Drücken in die zurückgezogene Position oder die Ausdehnungsposition bewegt, und sich der Kolben durch Nichtbeaufschlagen des Zylinders mit Drücken unter der Wirkung des elastischen Elements (413) in der Zwischenposition befindet.

11. Vorrichtung zur Einstellung der Spezifikation einer Bautrommel gemäß Anspruch 7, wobei das Antriebselement (411) ein Motor ist, das Abtriebselement (412) eine Leitspindel und eine Mutter ist, die Mutter mit der Getriebebaugruppe (42) verbunden ist und wenn der Motor die Leitspindel zum Drehen antreibt, die Leitspindel die Mutter antreibt, um sich in die zurückgezogene Position, die Zwischenposition und die Ausdehnungsposition zu bewegen.

12. Vorrichtung zur Einstellung der Spezifikation einer Bautrommel gemäß Anspruch 7, wobei die Vorrichtung zur Einstellung der Spezifikation einer Bautrommel eine Stützplattenbaugruppe (30), eine Verriegelungsblockbaugruppe (40) oder eine Mitteltrommelbaugruppe (50) ist.

## Revendications

1. Procédé d'ajustement de spécification de tambour de confection, dans lequel un dispositif d'ajustement de spécification de tambour de confection comprend un ensemble d'entraînement (41), un ensemble de transmission (42) et un organe à diamètre variable (43) qui sont connectés séquentiellement ; l'ensemble d'entraînement (41) comprend un organe d'entraînement (411) et un organe de sortie (412) ; et le procédé d'ajustement de spécification de tambour de confection comprend :
l'entraînement de l'organe de sortie (412) se déplaçant axialement par l'organe d'entraînement (411) selon la taille du pneu à traiter vers une position rétractée ou une position intermédiaire, et permettant à l'organe à diamètre variable (43) d'être situé au niveau du diamètre minimum ou du diamètre intermédiaire ;
après qu'un matériau est collé ou qu'un anneau en acier est installé, l'organe de sortie (412) est entraîné pour se déplacer vers une position d'expansion par l'organe d'entraînement (411), et l'organe à diamètre variable (43) est changé vers le diamètre maximum ;
après que le traitement est terminé, l'organe de sortie (412) est entraîné par l'organe d'entraînement (411) pour se déplacer vers la position rétractée, le diamètre de l'organe à diamètre variable (43) est réduit et le pneu traité est déposé.

2. Procédé d'ajustement de spécification de tambour de confection selon la revendication 1, dans lequel l'organe d'entraînement (411) est un cylindre, l'organe de sortie (412) est un piston, lorsque le piston se déplace vers une extrémité du cylindre, le piston est situé au niveau de la position rétractée ou de la position d'expansion, lorsque le piston est situé entre deux extrémités du cylindre, le piston est situé dans la position intermédiaire, et la position intermédiaire est au moins une position commandant une position du piston en commandant une distance de course du piston dans le cylindre.

3. Procédé d'ajustement de spécification de tambour de confection selon la revendication 2, dans lequel le cylindre est formé d'une pluralité de chambres de gaz de tailles différentes, et le piston est entraîné pour se déplacer sur différentes distances en ajoutant des pressions dans les chambres de gaz de tailles différentes, de sorte que le piston se déplace dans la position rétractée, la position intermédiaire et la position d'expansion.

4. Procédé d'ajustement de spécification de tambour de confection selon la revendication 2, dans lequel l'ensemble d'entraînement (41) comprend en outre un organe élastique (413), lorsque l'organe élastique (413) est dans un état naturel, le piston est situé dans la position intermédiaire, et en ajoutant des pressions dans le cylindre, de sorte que le piston se déplace vers la position rétractée ou la position d'expansion, en n'ajoutant pas de pressions dans le cylindre, de sorte que le piston est situé au niveau de la position intermédiaire.

5. Procédé d'ajustement de spécification de tambour de confection selon la revendication 1, dans lequel l'organe d'entraînement (411) est un moteur, l'organe de sortie (412) est une vis-mère et un écrou, la rotation de la vis-mère est entraînée par le moteur, et la vis-mère entraîne l'écrou pour se déplacer dans la position rétractée, au moins une des positions intermédiaires et la position d'expansion.

6. Procédé d'ajustement de spécification de tambour de confection selon la revendication 1, dans lequel, lors de l'ajustement du diamètre de l'organe à diamètre variable (43), l'organe à diamètre variable (43) est ajusté d'une manière étape par étape ou d'une manière continue.

7. Dispositif d'ajustement de spécification de tambour de confection configuré pour réaliser le procédé d'ajustement de spécification de tambour de confection selon l'une quelconque des revendications 1 à 6, comprenant :
un ensemble d'entraînement (41), l'ensemble d'entraînement (41) comprenant un organe d'entraînement (411) et un organe de sortie (412) qui sont dans une connexion d'entraînement, dans lequel une distance d'entraînement de l'organe de sortie (412) le long de la direction axiale de l'organe d'entraînement (411) peut être ajustée, et l'organe de sortie (412) présente une position rétractée et une position d'expansion, et au moins une position intermédiaire située entre la position rétractée et la position d'expansion ;
un ensemble de transmission (42) en connexion d'entraînement avec l'organe de sortie (412) ;
un organe à diamètre variable (43), l'organe à diamètre variable (43) étant connecté à l'ensemble de transmission (42), l'organe de sortie (412) entraînant le mouvement de l'ensemble de transmission (42) pour changer la taille de diamètre de l'organe à diamètre variable (43), et lorsque l'organe de sortie (412) est situé au niveau de la position rétractée, de la position intermédiaire et de la position d'expansion, l'organe à diamètre variable (43) forme respectivement un diamètre minimum, un diamètre intermédiaire et un diamètre maximum avec des diamètres augmentant successivement.

8. Dispositif d'ajustement de spécification de tambour de confection selon la revendication 7, dans lequel l'organe d'entraînement (411) est un cylindre, l'organe de sortie (412) est un piston, le piston est situé dans la position rétractée ou la position d'expansion lorsqu'il se déplace vers une extrémité du cylindre, et le piston est situé dans la position intermédiaire lorsqu'il est situé entre les deux extrémités du cylindre.

9. Dispositif d'ajustement de spécification de tambour de confection selon la revendication 8, dans lequel le cylindre est formé d'une pluralité de chambres de gaz de tailles différentes, et le piston est entraîné pour se déplacer sur différentes distances en ajoutant des pressions dans les chambres de gaz de tailles différentes, de sorte que le piston se déplace dans la position rétractée, la position intermédiaire et la position d'expansion.

10. Dispositif d'ajustement de spécification de tambour de confection selon la revendication 8, dans lequel l'ensemble d'entraînement (41) comprend en outre un organe élastique (413) venant buter contre l'organe de sortie (412), lorsque l'organe élastique (413) est dans un état naturel, le piston est situé dans la position intermédiaire, et en ajoutant des pressions dans le cylindre, de sorte que le piston se déplace vers la position rétractée ou la position d'expansion, en n'ajoutant pas de pressions dans le cylindre, de sorte que le piston est situé au niveau de la position intermédiaire sous l'action de l'organe élastique (413).

11. Dispositif d'ajustement de spécification de tambour de confection selon la revendication 7, dans lequel l'organe d'entraînement (411) est un moteur, l'organe de sortie (412) est une vis-mère et un écrou, l'écrou est connecté à l'ensemble de transmission (42), et lorsque le moteur entraîne la rotation de la vis-mère, la vis-mère entraîne le déplacement de l'écrou dans la position rétractée, la position intermédiaire et la position d'expansion.

12. Dispositif d'ajustement de spécification de tambour de confection selon la revendication 7, dans lequel le dispositif d'ajustement de spécification de tambour de confection est un ensemble de plaque de renfort (30), un ensemble de bloc de verrouillage (40) ou un ensemble de tambour central (50).
